# EUROPÄISCHE PATENTANMELDUNG

(11) **EP 2 796 431 A1**
(43) Veröffentlichungstag der Anmeldung: **29.10.2014**
(21) Anmeldenummer: 14164321.3
(22) Anmeldetag: 11.04.2014
(51) Int. Cl.: C03C 3/091, A61J 1/00, C03C 3/093, C03C 4/20

(54) **Borosilikatglas mit verbesserter hydrolytischer Beständigkeit zur bevorzugten Verwendung im Pharmabereich**

(30) Priorität: 26.04.2013 DE 102013207634
(71) Anmelder: Schott AG, 55122 Mainz (DE)
(72) Erfinder: TRATZKY, Stephan, 92660 Neustadt/Wn. (DE); KASS, Christof, 95643 Tirschenreuth (DE); EICHHOLZ, Rainer, 60323 Frankfurt am Main (DE); NASS, Peter, 55120 Mainz (DE)

(57) **Zusammenfassung**

Die Erfindung betrifft ein Borosilkatglas, bevorzugt zur Verwendung im Pharmabereich, das die nachfolgende Zusammensetzung in Gew.-% aufweist oder hieraus besteht:
SiO₂ 71 - 77
B₂O₃ 9 - 12
Al₂O₃ 5,5 - 8
Na₂O 6 - 8
K₂O 0,1 - 0,9
Li₂O 0 - 0,3
CaO 0 - 1,5
BaO 0 - 1
F 0-0,3
Cl- 0 - 0,3
MgO+CaO+BaO+SrO 0 - 2.

Die erfindungsgemäßen Borosilikatgläser sind hervorragend für die Verwendung als Pharmaprimärpackmittel, wie Fläschchen oder Ampullen, geeignet, da die in den Behältnissen aufbewahrten wässrigen oder wasserhaltigen Arzneimittel das Glas nicht in nennenswerter Art und Weise angreifen, so dass das Glas keine oder nur wenige Ionen freisetzt.

## Beschreibung

Die Erfindung betrifft ein Borosilikatglas mit verbesserter hydrolytischer Beständigkeit zur bevorzugten Verwendung im Pharmabereich.

### Hintergrund der Erfindung

Im Pharmabereich kommt Glas als Verpackungsmaterial in großem Umfang zur Anwendung. Insbesondere dessen spezielle Materialeigenschaften, wie hohe Transparenz, mechanische Beständigkeit, geringe Durchlässigkeit und Permeabilität in Verbindung mit der hohen chemischen Beständigkeit, sind entscheidend für die Beibehaltung der Qualität der Arzneimittel und damit deren Wirksamkeit.

Die Glasbehältnisse oder Primärpackmittel für pharmazeutische Zwecke sind in der Regel in direktem Kontakt mit einem enthaltenen Arzneimittel und unterliegen daher strengen Anforderungen. Diese sind so beschaffen, dass der Inhalt in geeigneter Weise entnommen werden kann, wobei gleichzeitig möglichst kein Verlust und keine Veränderung, vorzugsweise keine physikalischen oder chemischen Einwirkungen auf den Inhalt, auftreten. Die Qualität des Inhalts darf durch den direkten Kontakt mit dem Behältnis oder Primärpackmittel nicht so verändert werden, dass die geforderten Grenzwerte überschritten werden. In jedem Fall muss sichergestellt sein, dass das Glasmaterial keine Substanzen in Mengen abgibt, die die Stabilität des Arzneimittels beeinträchtigen oder gar toxisch für den Anwender sein könnten.

Bei Arzneimitteln auf wässriger Basis ist die wichtigste Eigenschaft eines Pharmaprimärpackmittels aus Glas die Beständigkeit seiner Innenoberfläche, die mit dem Arzneimittel auf wässriger Basis in Berührung kommt und hiervon angegriffen wird. Dadurch können diverse Ionen aus der Glasoberfläche herausgelöst werden. Dies kann beispielsweise bei Alkali- und Erdalkaliionen zu einer pH-Wertverschiebung des wässrigen Mediums führen, die die Wirksamkeit des Arzneimittels herabsetzt. Von den Glaskomponenten steht zudem Aluminium im Verdacht, bei Menschen mit bestimmten genetischen Veranlagungen, z.B. einer verstärkten Aluminiumaufnahme im Stoffwechsel, gesundheitliche Schäden auslösen zu können. Um gesundheitliche Risiken auszuschließen, sollten daher generell so wenig wie möglich Ionen aus dem Glas herausgelöst werden.

Häufig verwendete Gläser für Verwendungen im Pharmabereich sind Borosilikatgläser, sog. Neutralgläser, oder Natronkalk-Silicatgläser. Die Gruppe der verwendbaren Borosilikatgläser ist äußerst umfangreich und umfasst üblicherweise:

| | |
|---|---|
| SiO₂ | etwa 70 bis 80 Gew.-% |
| B₂O₃ | etwa 7 bis 20 Gew.-% |
| Al₂O₃ | etwa 2 bis 7 Gew.-% |
| Alkalioxide | etwa 3 bis 10 Gew.-%. |

Es sind zahlreiche derartige Gläser aus dem Stand der Technik bekannt geworden:

So bezieht sich die DE 37 22 130 A1 auf ein Borosilikatglas, das der ersten hydrolytischen Klasse nach DIN 12111, der ersten Säureklasse nach DIN 12116 und der zweiten Laugenklasse nach DIN 52322 angehört, eine lineare Wärmeausdehnung zwischen 20°C und 300°C von 4,3 bis 5,0 x 10⁻⁶ K⁻¹, eine Transformationstemperatur von 535 bis 570°C, eine Verarbeitungstemperatur von 1140 bis 1220°C und eine Röntgenabsorption bei 0,6 Å von < 5,20 cm⁻¹ besitzt, und die folgende Zusammensetzung aufweist:

| | |
|---|---|
| SiO₂ | 74,5 bis 76,5 Gew.-% |
| B₂O₃ | 10,0 bis 12,0 Gew.-% |
| Al₂O₃ | 3,5 bis 6,0 Gew.-% |
| Na₂O | 6,0 bis 8,0 Gew.-%// |
| CaO | 1,0 bis 2,0 Gew.-% |
| ZrO₂ | 0 bis 0,50 Gew.-% |
| F | 0 bis 1,0 Gew.-%, |

wobei As₂O₃ und/oder Sb₂O₃ und/oder NaCl als Läutermittel dienen. Um eine minimale Röntgenabsorption zu erhalten, ist in diesem Borosilikatglas kein K₂O, BaO oder ZnO enthalten. Die Borosilikatgläser weisen zum Teil relativ niedrige thermische Ausdehnungskoeffizienten α(20°C; 300°C) sowie verhältnismäßig hohe Verarbeitungstemperaturen auf. Außerdem sind die Gläser aufgrund des fehlenden K₂O-Gehalts kristallisationsanfälliger.

Gemäß der DE 44 30 710 C1 wird ein borsäurearmes Borosilikatglas hoher chemischer Beständigkeit mit der nachfolgenden Zusammensetzung in Gew.-% auf Oxidbasis offenbart:

| | |
|---|---|
| SiO₂ | > 75 |
| B₂O₃ | 1 - < 9 |
| Al₂O₃ | 3 - 6 |
| Li₂O | 0 - 4 |
| Na₂O | 0 - 8 |
| K₂O | 0 - 6 |
| MgO | 0 - 3 |
| CaO | 0 - 3 |
| BaO | 0 - 2 |
| SrO | 0 - 2 |
| ZnO | 0 - 3 |
| ZrO₂ | 0 - 3 |
| SnO₂ | 0 - 3 |
| SnO | 0 - 3 |
| TiO₂ | 0 - 2 |
| CeO₂ | 0 - 2 |
| Fe₂O₃ | 0 - 1 |

mit

| | |
|---|---|
| SiO₂ +B₂O₃ | > 83 |
| SiO₂ : B₂O₃ | > 8 |
| SiO₂+Al₂O₃+ZrO₂ | > 83 |
| Li₂O+Na₂O+K₂O | 5 - 10 |
| MgO+CaO+BaO+SrO+ZnO | ≤ 3. |

Der Boroxidgehalt des Glases liegt unterhalb des erfindungsgemäßen Bereichs.

Die DE 100 25 465 C2 beschreibt ein lithiumoxidarmes Borosilikatglas, das folgende Zusammensetzung (in Gew.-% auf Oxidbasis) aufweist:

| | |
|---|---|
| SiO₂ | 72,0 - 77,0 |
| B₂O₃ | 5,0 - 10,0 |
| Al₂O₃ | 3,0 - 7,0 |
| ZrO₂ | 0,1 - 3,0 |
| Li₂O | 0,05 - < 0,5 |
| Na₂O | 0 - 10,0 |
| K₂O | 0 - 10,0 |
| ZnO | 0 - 8,0 |
| CaO | 0 - 5,0 |
| BaO | 0 - 5,0 |
| SrO | 0 - 5,0 |
| TiO₂ | 0 - 4,0 |
| SnO₂ | 0 - 3,0 |
| Fluoride | 0 - 3,0 |
| Läutermittel | 0 - 2,0 |

unter den Bedingungen:

| | |
|---|---|
| Na₂O: K₂O | > 0,75 |
| SiO₂:B₂O₃ | > 7,5 |
| LSiO₂+ SnO₂+ Al₂O₃+ZrO₂ | 80,0 - 83,0. |

Der bevorzugte K₂O-Gehalt beträgt 2,0 bis 8,0. Sämtliche beispielhaft angegebenen Glaszusammensetzungen weisen entweder deutlich mehr oder gar kein Kaliumoxid auf und sind daher nicht im erfindungsgemäß erforderlichen Bereich.

Weiterhin betrifft die DE 100 27 699 A1 ein Zirkoniumoxid- und Lithiumoxid-haltiges Borosilikatglas hoher chemischer Beständigkeit mit der folgenden Zusammensetzung (in Gew.-% auf Oxidbasis):

| | |
|---|---|
| SiO₂ | 71,5 - 74,5 |
| B₂O₃ | 8 - 11 |
| Al₂O₃ | 5 - 7 |
| Li₂O | 0,1 - < 0,5 |
| Na₂O | 5 - 6,5 |
| K₂O | 1,8 - 3 |
| mgO | 0 - 1 |
| CaO | 0 - 2 |
| mit | |
| MgO + CaO | 0 - 2 |
| ZrO₂ | 0,5 - 2 |
| CeO₂ | 0 - 1 |
| F⁻ | 0 - 0,3 |

sowie ggf. übliche Läutermittel in üblichen Mengen. Somit liegt der K₂O-Gehalt mit 1,8 bis 3 Gew.-% außerhalb des erfindungsgemäßen Bereichs, so dass die erfindungsgemäßen Effekte nicht erzielt werden können. Die Alkaliionenabgabe dieses Borosilikatglases zeigt bei Glasbehältnissen im Pharmabereich zu hohe Werte. Beim angegebenen K₂O-Gehalt ist außerdem die Verdampfungsrate zu hoch.

Gemäß der Offenbarung der DE 102 38 915 B3 wird ein Borosilikatglas hoher hydrolytischer Beständigkeit beschrieben, das die folgende Zusammensetzung (in Gew.-% auf Oxidbasis) aufweist:

| | |
|---|---|
| SiO₂ | 70,5 - < 73 |
| B₂O₃ | 8 - 10 |
| Al₂O₃ | 4 - 5,6 |
| Li₂O | 0 - < 0,5 |
| Na₂O | 7 - 9 |
| K₂O | 1,2 - 2,5 |
| mgO | 0 - 1 |
| CaO | 0 - 2 |
| mit | |
| MgO + CaO | 0 - 2 |
| BaO | >2 - 4 |
| ZrO₂ | 0 - 2 |
| CeO₂ | 0 - 1 |
| F⁻ | 0 - 0,6 |

sowie ggf. übliche Läutermittel in üblichen Mengen.

Ein derart hoher BaO-Gehalt von >2 - 4 Gew.-% kann für Primärpackmittel im Pharmabereich, insbesondere wenn wässrige Arzneimittel enthalten sein sollen, nicht toleriert werden, da sich schwerlösliche Niederschläge bilden können, welche die Arzneimittel verändern und generell unbrauchbar machen. Außerdem sind diese Gläser mit einem Aluminiumoxidgehalt von 4 bis 5,6 Gew.-% kristallisationsanfälliger als die erfindungsgemäße Glaszusammensetzung. Daher sind die beschriebenen Borosilikatgläser nicht ohne weiteres in einem Ziehverfahren verarbeitbar.

Weiterhin beschreibt die DE 103 37 362 B4 ein aluminiumfreies Borosilikatglas mit guter chemischer Beständigkeit mit der folgenden Zusammensetzung (in Gew.-% auf Oxidbasis):

| | |
|---|---|
| SiO₂ | 60 - 78 |
| B₂O₃ | 7 - 20 |
| Li₂O | 0 - 2 |
| Na₂O | 0 - 4 |
| K₂O | 3 - 12 |
| mgO | 0 - 2 |
| CaO | 0 - 2 |
| mit | |
| MgO + CaO | 0 - 3 |
| BaO | 0 - 3 |
| ZnO | 0-2 |
| ZrO₂ | 0,8 - 12 |
| TiO₂ | 0 - 10 |
| CeO₂ | 0 - 1 |
| F⁻ | 0 - 0,6 |

sowie ggf. übliche Läutermittel in üblichen Mengen.

Diese Glaszusammensetzung ist aluminiumfrei und unterscheidet sich grundsätzlich von der erfindungsgemäßen Borosilikatglaszusammensetzung.

Die DE 102 38 930 C1 offenbart ebenfalls ein aluminiumfreies Borosilikatglas mit guter chemischer Beständigkeit mit der folgenden Zusammensetzung (in Gew.-% auf Oxidbasis):

| | |
|---|---|
| SiO₂ | 65,0 - 77 |
| B₂O₃ | 7,0 - 20 |
| Li₂O | 0 - 2 |
| Na₂O | 0 - 4 |
| K₂O | 3,0 - 12 |
| MgO | 0 - 2 |
| CaO | 0 - 2 |
| mit | |
| MgO + CaO | 0 - 3 |
| BaO | 0 - 3 |
| ZnO | 0 - 2 |
| ZrO₂ | 0,8 - 12 |
| TiO₂ | 0 - 5 |
| CeO₂ | 0 - 1 |
| F⁻ | 0 - 0,6 |

sowie ggf. übliche Läutermittel in üblichen Mengen.

Diese Glaszusammensetzung ist aluminiumfrei und unterscheidet sich wieder grundsätzlich von der erfindungsgemäßen Glaszusammensetzung.

Ferner betrifft die EP 0 765 847 A1 sowie die parallele DE 195 36 708 C1 ein Zirkoniumoxid- und Lithiumoxid-haltiges Borosilikatglas hoher chemischer Beständigkeit und geringer Viskosität mit der nachfolgenden Zusammensetzung (in Gew.-% auf Oxidbasis):

| | |
|---|---|
| SiO₂ | 73,0 - 75,0 |
| B₂O₃ | 7,0 - 10,0 |
| Al₂O₃ | 5,0 - 7,0 |
| ZrO₂ | 1,0 - 3,0 |
| Li₂O | 0,5 - 1,5 |
| Na₂O | 0 - 10,0 |
| K₂O | 0 - 10,0 |
| MgO | 0 - 3,0 |
| CaO | 0 - 3,0 |
| BaO | 0 - 3,0 |
| SrO | 0 - 3,0 |
| ZnO | 0 - 3,0 |
| Fluoride | 0 - 3,0 |

mit

| | |
|---|---|
| SiO₂/B₂O₃ | ≥ 7,5 |
| ΣSiO₂+Al₂O₃+ZrO₂ | 80,0 - 83,0 |
| ΣMgO+CaO+BaO+SrO+ZnO | ≤ 3,0 |

Der Lithiumoxidgehalt überschreitet die erfindungsgemäße Obergrenze, so dass die erfindungsgemäßen Vorteile nicht erhalten werden können.

Die DE 198 42 942 A1 bezieht sich auf ein Zirkoniumoxid- und Lithiumoxid-haltiges Borosilikatglas hoher chemischer Beständigkeit mit der nachfolgenden Zusammensetzung (in Gew.-% auf Oxidbasis):

| | |
|---|---|
| SiO₂ | 71 - <73 |
| B₂O₃ | 7 - 10 |
| Al₂O₃ | 5,5 - 9 |
| Li₂O | 0,5 - 2 |
| Na₂O | 0 - 10,0 |
| K₂O | 0 - 10,0 |
| mit | |
| Li₂O+ Na₂O+ K₂O | 0,5 - 10,5 |
| MgO | 0 - 2 |
| CaO | 0 - 3 |
| SrO | 0 - 3 |
| BaO | 0 - 3 |
| ZnO | 0 - 3 |
| mit | |
| MgO+CaO+SrO+BaO+ZnO | 0 - 3 |
| ZrO₂ | 0,8 - 3 |
| CeO₂ | 0 - 1, |

sowie gegebenenfalls übliche Läutermittel in üblichen Mengen.

Der angegebene Lithiumoxidgehalt überschreitet die erfindungsgemäße Obergrenze, so dass die erfindungsgemäßen Vorteile nicht erhalten werden können.

Die DE 20 2010 014 985 U1 beschreibt ein magnesiumoxidhaltiges Borosilikatglas, das folgende Komponenten (in Gew.-% auf Oxidbasis) aufweist:

| | |
|---|---|
| SiO₂ | 71,5 - 78 |
| B₂O₃ | ≥10 - 12 |
| Al₂O₃ | ≥3 - 7 |
| Na₂O | ≥6,5 - 8 |
| K₂O | 0,5 - 2,0 |
| MgO | 1,5 - 1,9 |
| CaO | 0,3 - 1,0 |
| BaO | 0 - 0,5 |
| SrO | 0 - 0,5 |
| MgO+CaO+BaO+SrO | > 2 |
| ZrO₂ | 0 - 1 |

sowie ggf. übliche Läutermittel in üblichen Mengen.

Diese Glaszusammensetzung enthält mehr als 2 Gew.-% der Erdalkalioxide, so dass dessen Eignung als Primärpackmittel im Pharmabereich, insbesondere für wässrige Arzneimittel, aufgrund der höheren Menge an Erdalkalioxiden nicht gegeben ist.

Die US 4 386 164 beschreibt ein bariumfreies Typ I, Klasse B, Laborglas gemäß der ASTM E 438-80a mit einem linearen Ausdehnungskoeffizienten (0 bis 300°C, cm/cm-°C x 10⁻⁷) von etwa 48 bis 56, chemischer Beständigkeit, einem maximalen Titrationsäquivalent von 0,2N H₂SO₄/10 g Glas von 1,0 ml, wobei die Zusammensetzung im wesentlichen aus den folgenden Bestandteilen in Gew.-% besteht:

| | |
|---|---|
| SiO₂ | 70 - 74 |
| B₂O₃ | 9 - 13 |
| Al₂O₃ | 5 - 8 |
| Na₂O | 5 - 8 |
| K₂O | 0 - 4 |
| CaO | 0 - 3 |
| MgO | 0 - 1, |

wobei die Glaszusammensetzung eine obere Kühltemperatur von etwa 550 bis 585°C, eine Erweichungstemperatur von etwa 783 bis 799°C, eine Liquidus-Temperatur von etwa 1730 bis 1760°F und einen log η bei der Liquidus-Temperatur von etwa 5,0 bis 5,5 aufweist.

Die erfindungsgemäß erzielten Effekte sind nicht beschrieben. In den Ausführungsbeispielen sind nur K₂O-Gehalte von 2,29 Gew.-% und darüber angegeben. Die beschriebene Vergleichszusammensetzung weist zwar 0,1 bis 2,0 % K₂O auf, jedoch einen deutlich zu hohen Na₂O- und CaO + MgO-Gehalt, der deutlich höher liegt als erfindungsgemäß zulässig. Zudem wird diese Vergleichszusammensetzung hinsichtlich ihrer Eigenschaften als schlecht geschildert.

Die US 3 942 992 offenbart ein chemisch beständiges Glas, das im Wesentlichen frei von Alkalioxiden und B₂O₃ ist und einen Gewichtsverlust von nicht mehr als etwa 0,05 mgs/cm², wenn einer 5 Gew.-%igen HCl-Lösung bei 95°C für 24 Stunden ausgesetzt wird, und einen Gewichtsverlust von nicht mehr als etwa 0,5 mgs/cm², wenn einer 5 Gew.-%igen NaOH-Lösung bei 95°C für 6 Stunden ausgesetzt wird, zeigt, und im wesentlichen besteht aus (berechnet in Kationen-Prozent auf Oxidbasis):

| | |
|---|---|
| SiO₂ | 59 - 70 % |
| AlO_{1,5} | 9 - 15 % |
| BaO | 5 - 25 % |
| CaO | 0 - 17 % |
| ZnO | 0 - 7% |
| BaO+CaO+ZnO | 15 - 30 % |
| ZrO₂ | 2-< 5 %. |

Diese Glaszusammensetzung ist zwar säure- und laugenbeständig, die hydrolytische Beständigkeit wird jedoch nicht erwähnt und spielt keine Rolle. Weiterhin muss zwingend Zirkoniumoxid enthalten sein.

Die obigen Gläser sind nicht speziell darauf ausgelegt als Pharmaprimärpackmittel, insbesondere für Arzneimittel auf wässriger Basis, verwendet zu werden. Ziel der vorliegenden Erfindung ist es daher, eine Glaszusammensetzung mit einer hohen Beständigkeit gegenüber Wasserangriff zu finden, d.h. mit einer geringen lonenabgabe an ein Arzneimittel auf wässriger Basis.

Der vorliegenden Erfindung liegt daher die Aufgabe zugrunde, ein Glas mit einer Glaszusammensetzung bereitzustellen, das in hohem Maße die Anforderungen an im Pharmabereich einzusetzende Gläser erfüllt und insbesondere eine möglichst geringe Ionenabgabe an ein wässriges Medium zeigt und daher vorzugsweise zur Verwendung mit wässrigen oder wasserhaltigen Arzneimitteln geeignet ist.

### Beschreibung der Erfindung

Erfindungsgemäß wird die gestellte Aufgabe in überraschender Weise durch ein Borosilikatglas, bevorzugt zur Verwendung im Pharmabereich gelöst, das die nachfolgende Zusammensetzung in Gew.-% aufweist oder hieraus besteht:

| | |
|---|---|
| SiO₂ | 71 - 77 |
| B₂O₃ | 9 - 12 |
| Al₂O₃ | 5,5 - 8 |
| Na₂O | 6 - 8 |
| K₂O | 0,1 - 0,9 |
| Li₂O | 0 - 0,3 |
| CaO | 0 - 1,5 |
| BaO | 0 - 1 |
| F | 0 - 0,3 |
| Cl- | 0 - 0,3 |
| MgO+CaO+BaO+SrO | 0 - 2. |

Es versteht sich, dass die Komponenten in der Glaszusammensetzung derart ausgewählt werden, dass sich insgesamt 100 Gew.-% ergeben.

Es ist überraschend, dass eine Glaszusammensetzung aus dem Bereich der Borosilikatgläser, die seit langem bekannt sind, häufig wissenschaftlich untersucht wurden und vielseitig praktische Verwendung finden, in speziell modifizierter Form für die Lösung der obigen Aufgabe herangezogen werden kann.

In unerwarteter Weise wurde festgestellt, dass bei den Glaszusammensetzungen durch Einstellung des Kaliumgehaltes in einem relativ engen Bereich von 0,1 bis 0,9 Gew.-% eine nicht vorhersagbare hydrolytische Beständigkeit der Glaszusammensetzungen resultiert. Überraschenderweise besitzen Glaszusammensetzungen mit identischem Gehalt sämtlicher anderer, oben angegebener Komponenten, aber ohne Kaliumgehalt, als auch Glaszusammensetzungen, die einen Kaliumoxidgehalt über 0,9 Gew.% aufweisen, eine schlechtere, zum Teil deutlich schlechtere hydrolytische Beständigkeit als die erfindungsgemäße Glaszusammensetzung mit einem Kaliumoxid-Gehalt im Bereich von 0,1 bis 0,9 Gew.%.

Durch die Einhaltung des erfindungsgemäßen Kaliumoxid-Bereichs für das Borosilikatglas der vorliegenden Erfindung wird nicht nur die Gesamtalkaliabgabe aus dem Glas reduziert, sondern auch die Abgabe sämtlicher anderer Ionen, wie Aluminiumionen, wird im Vergleich zu bekannten Gläsern aus dem Stand der Technik deutlich abgesenkt. Insgesamt wird für das erfindungsgemäße Borosilikatglas somit eine deutlich geringere Gesamtionenabgabe des Glases festgestellt als zu erwarten wäre. Dies ist insbesondere für Verwendungen im Pharmabereich von Bedeutung, da ein Herauslösen von Ionen aus dem Glas aufgrund möglicher gesundheitlicher Risiken so weit wie möglich reduziert werden sollte.

Es handelt sich erfindungsgemäß um einen relativ engen Bereich, der mit den unerwarteten Effekten korreliert ist: So verbessert Kaliumoxid bei Anteilen von 0,1 Gew.-% und darüber die hydrolytische Beständigkeit des Borosilikatglases. Durch ihren sehr großen Ionenradius belegen die Kaliumionen die großen Lücken in der Glasstruktur. In aluminiumhaltigen Borosilikatgläsern gibt es davon nur vergleichsweise wenige, so dass der Gehalt an Kaliumionen maximal die bezeichnete Obergrenze von 0,9 Gew.-% aufweisen sollte; die Obergrenze ist daher kritisch. Durch seine Größe ist das Kaliumion sehr fest in der Glasstruktur eingebaut. Baut man jedoch zu viel Kalium ein, wird die Glasstruktur gedehnt, was zu einer erhöhten Abgabe beispielsweise der kleineren Natrium- und Lithiumionen bei Kontakt mit wässrigen Lösungen führt. Demzufolge darf die angegebene Obergrenze von 0,9 Gew.-% im keinem Fall überschritten werden.

In einer bevorzugten Ausführungsform der vorliegenden Erfindung liegt der K₂O-Gehalt im Bereich von 0,1 bis 0,88 Gew.-%, bevorzugter im Bereich von 0,1 bis 0,85 Gew.-%, noch bevorzugter im Bereich von 0,1 bis 0,8 Gew.-%, insbesondere im Bereich von 0,2 bis 0,8 Gew.-%. Ganz besonders vorteilhafte Ergebnisse werden im Bereich von 0,2 bis 0,75 Gew.-% erhalten. Es ist jedoch in der Regel für Pharmaprimärpackmittel ausreichend, wenn der K₂O-Gehalt in der erfindungsgemäßen Glaszusammensetzung im Bereich von 0,1 bis 0,9 Gew.-% eingestellt wird.

Neben der gezielten Herabsetzung der Ionenabgabe des Borosilkatglases der vorliegenden Erfindung hat das vorhandene Kalium den weiteren Vorteil, dass die Entglasungseigenschaften des Glases verbessert werden.

Ein bekannter Nachteil des Kaliums ist jedoch die größere Verdampfungstendenz im Vergleich zu Natrium. Dies ist beispielsweise bei der Heißformgebung eines Glasbehältnisses von Bedeutung: Enthält das Glas einen zu hohen Kaliumanteil, entstehen bei der Heißformgebung verstärkt sog. Lampenringe. Dies sind ringförmige Ablagerungen von Alkaliboraten, die sich oberhalb des Bodens eines Behältnisses, wie zum Beispiel eines Vials (Fläschchens) oder einer Ampulle, ausbilden. Nach der Herstellung des Behältnisses glasen diese Alkaliborate beim sich anschließenden Kühlprozess aus, wodurch die Glasstruktur der inneren Glasoberfläche unter diesen Lampenringen zerstört wird. Als Folge hiervon kann die geschädigte innere Oberfläche des Behältnisses beim Sterilisationsprozess oder durch Reaktion mit dem enthaltenen Arzneimittel ausgelaugt werden, wodurch sich die ausgelaugten Glasbereiche schuppenartig ablösen. Wenn man den Kaliumoxid-Gehalt im erfindungsgemäßen Bereich einstellt, kann dieser nachteilige Effekt minimiert werden, es findet keine verstärkte Verdampfung von Alkaliboraten statt.

Neben dem Kaliumoxidgehalt, der erfindungsgemäß im angegebenen Bereich einzustellen ist, spielen auch die anderen Komponenten der Glaszusammensetzung eine Rolle. Innerhalb der beanspruchten Zusammensetzungsbereiche können auch verschiedene Teilbereiche vorteilhaft und daher bevorzugt sein.

So liegt der Anteil von SiO₂ erfindungsgemäß im Bereich von 71 bis 77 Gew.-%. SiO₂ stellt die Basiskomponente für die erfindungsgemäßen besonders beständigen Gläser für Pharmaprimärpackmittel dar. Bevorzugt liegt der SiO₂-Gehalt im Bereich von 72 bis 77 Gew.-%, noch bevorzugter 73 bis 77 Gew.-% insbesondere bevorzugt > 74 bis 77 Gew.-%. Oberhalb 77 Gew.-% steigen die Schmelztemperatur und die Verarbeitungstemperatur deutlich an, so dass die angegebene Obergrenze für den SiO₂-Gehalt besonders kritisch ist und eingehalten werden sollte.

Der Gehalt an Al₂O₃ in der erfindungsgemäßen Glaszusammensetzung beträgt 5,5 bis 8 Gew.-%, bevorzugt 5,6 bis 7,8, noch bevorzugter 5,6 bis 7,5 Gew.-%, insbesondere bevorzugt 6,0 bis 7,2 Gew.-%. Aluminium wird als Netzwerkbildner eingebaut und zieht die gesamte Glasstruktur zusammen. Die Lücken im Glasnetzwerk werden für die Kationen dadurch kleiner, können aber noch von Lithium- und Natriumionen gefüllt werden. Die engere Struktur hat bei Auslaugung durch wässrige Lösungen eine geringere Alkaliabgabe zur Folge. Der Zusatz von Aluminiumoxid verbessert außerdem die Entglasungsstabilität. Da Aluminium jedoch die Schmelztemperatur und die Verarbeitungstemperatur erhöht, ist der einsetzbare Anteil auf 8 Gew.-% begrenzt.

Erfindungsgemäß wird B₂O₃ im Bereich von 9 bis 12 Gew.-%, bevorzugt im Bereich von 10 bis 12 Gew.-%, noch bevorzugter im Bereich von > 10 bis 12 Gew.-%, insbesondere 10,5 bis 11,5 Gew.-% eingesetzt. Die Zugabe von Boroxid verbessert entscheidend die hydrolytische Beständigkeit des Glases. Bor bindet die vorhandenen Alkaliionen fester in die Glasstruktur ein. Dieser Verbund ist die Grundlage für die bevorzugte Verwendung von Borosilikatgläsern als Pharmaprimärpackmittel.

Borgehalte > 12% führen jedoch zu erhöhter Verdampfung bei der Bodenformung von Behältnissen, so dass der Anteil im Glas auf maximal 12 Gew.-% begrenzt ist.

Der Natriumoxid-Gehalt beträgt erfindungsgemäß 6 bis 8 Gew.-%, besonders bevorzugt 6,5 bis 7,5 Gew.-%. Die Alkalioxide spielen eine Rolle für die Einstellung der Wärmedehnung (thermischer Ausdehnungskoeffizient) sowie die Schmelzbarkeit und Viskosität des Glases. Der erfindungsgemäße Bereich wurde als vorteilhaft festgestellt.

Lithium wird in der erfindungsgemäßen Glaszusammensetzung im Bereich von 0 bis 0,3 Gew.-% eingesetzt, bevorzugt ist ein Li₂O-Gehalt von 0 bis 0,2, besonders bevorzugt 0 bis < 0,2, insbesondere bevorzugt 0 bis 0,15 und 0 bis 0,12. Ganz besonders bevorzugt ist kein Lithium vorhanden. Lithium hat einen sehr kleinen lonenradius und belegt die kleinsten Lücken in der Glasstruktur. Davon sind nur wenige vorhanden. Werden zu viel Lithiumionen in die Glasstruktur eingebaut (> 0,3 Gew.%), besetzt es auch die größeren Lücken im Netzwerk, aus denen es aber leichter ausgelaugt werden kann und die hydrolytische Beständigkeit des Glases absenkt.

Der Calcium-Gehalt im erfindungsgemäßen Glas liegt im Bereich von 0 bis 1,5 Gew.-%, bevorzugt 0,1 bis 1,3 Gew.-%, besonders bevorzugt 0,2 bis 1,0 Gew.-%, insbesondere bevorzugt 0,3 bis 0,8 Gew.-%. Bereits kleine Anteile von Calcium verbessern die Schmelzbarkeit des Glases, liefern aber nur einen kleinen Beitrag zur Erhöhung der Alkaliabgabe. Die Zugabe von Calcium macht das Glas kürzer, d.h. es erhöht die Transformations- und obere Kühltemperatur, senkt aber die Verarbeitungstemperatur ab, und verbessert die Säurebeständigkeit von Borosilikatgläsern. Calciumionen haben den gleichen Durchmesser wie Natriumionen, konkurrieren somit beim Einbau um die gleichen Lücken in der Glasstruktur. Da diese Lückengröße in der Struktur jedoch nur begrenzt vorhanden ist, müssen bei einem zu großem Angebot von Natrium- und Calciumionen auch größere Netzwerklücken besetzt werden, aus denen Natrium leichter ausgelaugt werden kann, wodurch sich die hydrolytische Beständigkeit daher verschlechtert. Deshalb ist es wesentlich, den Calciumanteil in der Glaszusammensetzung der vorliegenden Erfindung auf den genannten Bereich zu begrenzen.

Weitere Erdalkalioxide, wie MgO und/oder SrO, können vorhanden sein. In jedem Fall ist die Summe aus MgO + CaO + BaO + SrO im Bereich von 0 bis 2 Gew.-% einzustellen, um nachteilige Effekt für den Pharmabereich auszuschließen.

Bis auf unvermeidliche Verunreinigungen der Rohstoffe enthält das Glas kein Bariumoxid, da Bariumoxid keine Komponente ist, die zwingend im Glas vorhanden sein muss. Das Glas kann jedoch einen Bariumoxidanteil von 0 bis 1,0 Gew.-%, bevorzugt 0,1 bis 1,0 Gew.-% enthalten, da Bariumoxid die Schmelzbarkeit des Glases verbessert und sich Bariumionen nur gering aus der Glasstruktur auslaugen lassen. Bei Gehalten oberhalb 1 Gew.-% tritt Bariumoxid mit bestimmten pharmazeutischen Wirkstoffen in unerwünschter Weise in Wechselwirkung und kann zu deren Zerstörung führen. Beispielsweise bildet sich schwerlösliches Bariumsulfat, das ausfallen und das Arzneimittel irreversibel verändern kann.

Bis auf unvermeidliche Verunreinigungen der Rohstoffe enthält das Glas kein Zirkoniumoxid, da Zirkoniumoxid keine Komponente ist, die zwingend im Glas vorhanden sein muss. Das Glas kann jedoch bevorzugt einen Zirkoniumoxidanteil von 0 bis 2 Gew.-%, noch bevorzugter 0 - 0,1 Gew.-% aufweisen. In Einzelfällen hat sich ein ZrO₂-Gehalt von < 0,1 Gew.-% als vorteilhaft herausgestellt. Der Zusatz von ZrO₂ kann die hydrolytische Beständigkeit verbessern. Hohe Anteile würden die Verarbeitungstemperatur zu sehr erhöhen, wobei die hydrolytische Beständigkeit nicht wesentlich erhöht wird.

Eine weitere optionale Glaskomponente ist Zinkoxid. Dieses kann erfindungsgemäß bevorzugt im Bereich von 0 bis 0,6 Gew.-%, bevorzugt 0,1 bis 0,5 Gew.-%, besonders bevorzugt 0,15 bis 0,45 Gew.-% vorliegen. Die Glaszusammensetzung kann auch völlig frei sein von Zinkoxid. Zinkoxid kann bereits in relativ geringen Mengen die Kristallisationsstabilität des erfindungsgemäßen Borosilikatglases erhöhen.

Das Glas kann mit üblichen Läutermitteln, wie z.B. CeO₂, Fe₂O₃, As₂O₃, Sb₂O₃, SnO₂, Chloriden, Fluoriden und Sulfaten, geläutert werden, die - je nach eingesetztem Läutermittel - in üblichen Mengen im Bereich 0,003 Gew.-% (bei As₂O₃ und Sulfaten) bis 0,6 Gew.-% (CeO₂) noch im fertigen Glas enthalten sein können. Wird weder As₂O₃ noch Sb₂O₃ als Läutermittel eingesetzt, ist das Glas vorteilhafterweise für den Einsatz in Pharmaprimärpackmitteln arsen- und antimonfrei.

Für die Glasbehältnisse, die im Pharmabereich eingesetzt werden, ist es in der Regel erforderlich, dass diese vor dem Befüllen sterilisiert werden. Neben der bekannten Hitzesterilisation bei Temperaturen von etwa 250 bis 300°C oder einem Sterilisieren mit überhitztem Wasserdampf ist auch eine Sterilisierung mittels energiereicher Strahlung (z.B. β-Strahlung, γ-Strahlung, starke UV-Strahlung) anwendbar. Jedoch zeigen die verwendeten Neutralgläser in Abhängigkeit von der eingesetzten Strahlungsdosis eine unerwünschte gelbe bis braune Färbung. Um dies zu vermeiden kann beispielsweise CeO₂ der erfindungsgemäßen Glaszusammensetzung zugesetzt werden, wodurch ein stahlungsstabilisiertes Glas resultiert, das sich beim Sterilisieren durch energiereiche Strahlung nicht verfärbt.

Der Begriff "Pharmaprimärpackmittel" ist im Rahmen der Erfindung möglichst breit zu verstehen und umfasst jede Art, Größe und Form von Glasbehältnis im weitesten Sinne. Hierunter soll jede Art Hohlkörper aus Glas verstanden werden, die verschließbar ist und im Pharmabereich eingesetzt werden kann. Beispielhafte Glasbehältnisse sind Flaschen, insbesondere Fläschchen, Vials oder Phiolen, Ampullen, Karpulen oder Spritzen.

Die Gläser der vorliegenden Erfindung weisen vorteilhafte Eigenschaften auf, die zu ihrer fehlerfreien und kostengünstigen Massenproduktion, insbesondere zur Herstellung von Pharmaprimärpackmitteln, erforderlich sind. Sie erfüllen die notwendigen Voraussetzungen an das Schmelzverhalten, die Kristallisationsstabilität, die Läutereigenschaften und die Verarbeitbarkeit.

Vorteilhafterweise weisen die erfindungsgemäßen Gläser einen thermischen Ausdehnungskoeffizient α_{20/300} im Bereich von 4,8 x 10⁻⁶ /K bis 5,6 x 10⁻⁶ /K auf. Bekanntermaßen kann die Wärmedehnung außer über die Menge der vorhandenen Alkali-oxide auch über die Auswahl der eingesetzten Alkalioxide eingestellt werden. Es gelingt damit erfindungsgemäß den gewünschten Bereich zur Verfügung zu stellen.

Ein Parameter zur Charakterisierung der Verarbeitbarkeit von Glas ist die Verarbeitungstemperatur, bei der die Viskosität des Glases 10⁴ dPas beträgt, die sogenannte Verarbeitungstemperatur V_{A}. Diese Verarbeitungstemperatur beträgt für pharmazeutisches Ampullenglas vorzugsweise nicht mehr als etwa 1220°C bis 1230°C. Hierdurch kann bei der Herstellung von Rohren und bei der sich anschließenden Weiterverarbeitung der Rohre zu Ampullen ein nachteiliges Verdampfen bestimmter Glaskomponenten, wie Alkalioxide und Borsäure, auf ein Mindestmaß herabgesetzt oder verhindert werden. Diese Ausdampfprodukte bilden in den aus Rohren hergestellten Glasbehältnissen Niederschläge und wirken sich nachteilig auf die hydrolytische Beständigkeit aus. Die bei der Warmverformung des Glases auftretenden Verdampfungen können sogar zur Unbrauchbarkeit des Glasbehältnisses führen. Eine niedrigere Verarbeitungstemperatur bedeutet daher, dass eine auftretende Verdampfung, insbesondere von Alkaliboraten, bei der Verformung der erfindungsgemäßen alkalihaltigen Borosilikatgläsern möglichst gering ist.

Gleichzeitig führt eine niedrige Verarbeitungstemperatur zu geringeren Energiekosten. Eine niedrigere Verarbeitungstemperatur bedeutet weiterhin ein niedrigere Schmelztemperatur und damit einer Verringerung der Herstellungskosten. Erfindungsgemäß liegt die Verarbeitungstemperatur V_{A} im Bereich von etwa 1140 bis 1180°C und erfüllt damit die entsprechenden Voraussetzungen.

Weiterhin wurde für die erfindungsgemäßen alkalihaltigen Borosilkatgläser festgestellt, dass die Viskosität im gesamten Schmelz-, Verarbeitungs- und Kühlbereich nicht zu hoch ist; dies ist vorteilhaft im Hinblick auf die zu erzielende Qualität des Glases und die resultierenden Kosten.

Gegenstand der Erfindung ist auch die Verwendung des erfindungsgemäßen Borosilikatglases im Pharmabereich, insbesondere als Pharmaprimärpackmittel, bevorzugt für wässrige oder wasserhaltige Arzneimittel.

Im Rahmen der Erfindung wird unter "wässrigem oder wasserhaltigem Arzneimittel" jede Art von Arzneimittelwirkstoff auch Mischungen von mehreren Arzneimittelwirkstoffen verstanden, das/die Wasser aufweist/aufweisen.

Unter "wässrigem Arzneimittel" wird ein Arzneimittel verstanden, dessen Hauptbestandteil Wasser darstellt. Zum Beispiel kann Wasser den Hauptbestandteil eines Dispergiermediums darstellen, in dem der/die Arzneimittelwirkstoffe verteilt vorliegen. Beispielsweise kann eine wässrige Lösung vorliegen, in dem der Arzneimittelwirkstoff gelöst vorliegt, wie beispielsweise eine Injektionslösung.

Unter "wasserhaltigem Arzneimittel" wird ein Arzneimittel verstanden, dessen Hauptbestandteil nicht Wasser darstellt. Beispielsweise kann dies ein wasserhaltiges Medium, beispielsweise ein Lösungsmittel darstellen, das einen Anteil an Wasser und andere Lösungsmittel, wie z.B. Alkohol aufweist, worin die ein oder mehreren Arzneimittelwirkstoffe dispergiert oder gelöst vorliegen.

Das wässrige oder wasserhaltige Arzneimittel kann in flüssiger Form vorliegen. Dies muss aber nicht in jedem Fall so sein. Es sind auch halbfeste oder feste Arzneimittel-Formulierungen verwendbar.

Die vorliegende Erfindung bezieht sich auch auf Pharmaprimärpackmittel, die aus dem erfindungsgemäßen Glas bestehen.

Die Vorteile des erfindungsgemäßen Borosilkatglases sind außerordentlich vielschichtig:

Durch den gezielt eingestellten Gehalt an Kaliumoxid in der erfindungsgemäßen Borosilikatglaszusammensetzung wird ein Minimum für die Gesamtalkaliionenabgabe und darüber hinaus eine deutlich reduzierte Gesamtionenabgabe erhalten, woraus eine hervorragende hydrolytische Beständigkeit des Glases resultiert. Besonders bemerkenswert ist, dass auch die Aluminiumionenabgabe gegenüber bekannten Gläsern deutlich abgesenkt werden kann, so dass diesbezügliche gesundheitliche Risiken minimiert werden.

Somit sind die erfindungsgemäßen Borosilikatgläser für die Herstellung von Pharmaprimärpackmitteln besonders geeignet. Es handelt sich um Gläser, die besonders gut für den Pharmabereich geeignet sind und die großtechnisch in ausreichend guter Qualität wirtschaftlich herstellbar sind. Diese sind gut schmelz- und ziehbar und lassen sich insbesondere gut zu Rohren ziehen, beispielsweise durch das bevorzugt eingesetzte Danner-Rohrziehverfahren. Pharmazeutische Behältnisse bzw. Primärpackmittel aus Glas werden üblicherweise durch Heißumformung aus Glasrohren gefertigt, so dass der Herstellung von Glasrohren besondere Bedeutung zukommt.

Die erfindungsgemäßen Borosilikatgläser weisen daher neben einer hohen chemischen Beständigkeit eine geeignete hydrolytische Beständigkeit auf, diese sind ausreichend kristallisationsstabil und weisen nur eine sehr geringe Entglasungsneigung auf.

Die Gläser weisen niedrige thermische Ausdehnungskoeffizienten α_{20/300} auf, was zu einer guten Temperaturwechselbeständigkeit führt.

Niedrige Verarbeitungstemperaturen V_{A} im Bereich von etwa 1140 bis 1180°C zeigen die gute Verarbeitbarkeit der Gläser.

Somit weisen die erfindungsgemäßen Gläser gute Materialeigenschaften auf, die diese für die Verwendung im Pharmabereich besonders geeignet machen. Gute Herstellungs- und Verarbeitungseigenschaften und eine geringe Entglasungsneigung ermöglichen eine wirtschaftliche Produktion auch im großindustriellen Maßstab.

Mit ihren Eigenschaften sind die erfindungsgemäßen Borosilikatgläser daher hervorragend für die Verwendung als Pharmaprimärpackmittel, wie Fläschchen oder Ampullen, geeignet. Die in den Behältnissen aufbewahrten Arzneimittel, insbesondere wässrige oder wasserhaltige Arzneimittel, wie wässrige Lösungen, beispielsweise Injektionslösungen, greifen das Borosilikatglas nicht in nennenswerter Art und Weise an, so dass das Glas keine oder nur wenige Ionen freisetzt.

Nachfolgend wird die vorliegende Erfindung anhand von Beispielen erläutert, welche die erfindungsgemäße Lehre veranschaulichen, diese aber nicht beschränken sollen.

### Beispiele:

Aus dem erfindungsgemäßen Glaszusammensetzungsbereich wurden 5 Ausführungsbeispiele exemplarisch ausgewählt und Rohre bzw. Rohrabschnitte hergestellt. Pharmazeutische Behältnisse aus Glas werden üblicherweise durch Heißumformung aus Glasrohren gefertigt, so dass es zweckmäßig ist, bereits die Glasrohre auf ihre Tauglichkeit und Qualität im Hinblick auf die Verwendung im Pharmabereich zu überprüfen.

Die Gläser wurden wie folgt hergestellt:
Zur Herstellung der Beispielgläser und der Vergleichsgläser wurde das Rohmaterial in einem Pt-Tiegel bei einer Temperatur von 1600°C über mehrere Stunden aufgeschmolzen, mit Chlorid geläutert (Beispiel V4 unter Zusatz von Antimonoxid) und
homogenisiert. Anschließend wurde das Glas in einer Laborrohrziehanlage senkrecht in Rohrform abgezogen.

In der nachfolgend angegebenen Tabelle 1 sind die jeweiligen Zusammensetzungen (in Gew.-% auf Oxidbasis), der thermische Ausdehnungskoeffizient α_{20/300} [10⁻⁶/K], die Transformationstemperatur Tg [°C] und die Verarbeitungstemperatur V_{A} [°C] angegeben.

Weiterhin ist in der nachfolgend angeführten Tabelle 2 die hydrolytische Beständigkeit anhand der Natriumabgabe nach ISO 4802-2 [µg Na₂O/Cm² Glasoberfläche], der Kaliumabgabe nach ISO 4802-2 [µg K₂O/cm² Glasoberfläche], der Gesamtalkaliabgabe nach ISO 4802-2 [µg Alkalioxid/cm² Glasoberfläche], der Aluminiumabgabe analog ISO 4802-2 [µg Al₂O₃/cm² Glasoberfläche] und der Gesamtionenabgabe analog ISO 4802-2 [µg ΣOxide der Bestandteile/cm² Glasoberfläche] der Gläser angegeben.

Die hydrolytische Beständigkeit, repräsentiert durch die Ionenabgabe für einzelne Glaskomponenten oder für alle vorhandenen Glaskomponenten oder -oxide der Glas(innen)oberfläche, wurde wie folgt bestimmt:
Um die hydrolytische Beständigkeit der Innenoberfläche eines Glasbehältnisses zu überprüfen wurde in Anlehnung an die bekannte Norm ISO 4802-2 (ISO 4802-2:2010(E)) vorgegangen.Die hydrolytische Beständigkeit wird hierbei durch Bestimmung der Ionenabgabe der Innenoberfläche von Glasbehältnissen festgestellt, wobei zusätzlich zu den in der ISO 4802-2 bestimmten, durch Wasser herausgelösten Alkali- und Erdalkaliionen erfindungsgemäß Aluminiumionen und sämtliche weitere aus dem Glas herausgelöste Ionen bestimmt wurden. Die Messung von Aluminium- und
Gesamtionenabgabe erfolgte daher analog zur ISO 4802-2.

Gemäß der ISO 4802-2 werden die Glasbehältnisse in einem Autoklaven Wasserdampf ausgesetzt. Der Autoklav wird dabei wie für eine Sterilisierung von medizinischen Instrumenten eingesetzt, wobei die Luft im Autoklaven durch Wasserdampf verdrängt wird. Die beim Autoklavieren zu untersuchenden Behältnisse sind mit einem vordefinierten Volumen an destilliertem Wasser oder Wasser äquivalenter Reinheit (Qualitätsstufe 3 entsprechend ISO 3696, wie in der ISO 4802-2:2010(E) angegeben) gefüllt. Im Wesentlichen wird hierbei nach dem Aufheizen des Autoklavens auf 100°C die Temperatur um 1°C je Minute von 100°C auf 121°C erhöht und diese Temperatur für etwa 60 min beibehalten. Die während dem Autoklavieren durch das Glasbehältnis in das enthaltene Wasser freigesetzten Ionenkonzentrationen werden anschließend in entsprechenden Analysenverfahren bestimmt.

In den vorliegenden Ausführungsbeispielen wurden -wie bereits ausgeführt - Glasrohre getestet, die als Ausgangsprodukte für die Herstellung von entsprechenden Glasbehältnissen oder Primärpackmitteln dienen können. Im Unterschied zur ISO 4802-2, die tatsächlich eine Norm für Pharmabehältnisse darstellt, wurden hier Rohrabschnitte verwendet. Hierzu wurden je 2 Stück 150 mm lange Rohrabschnitte aus der Mitte eines 1,5 m langen Rohres entnommen. Die verwendeten Rohrdurchmesser lagen im Bereich von 10 bis 16 mm. Für jedes Ausführungsbeispiel (erfindungsgemäßes Beispiel oder Vergleichsbeispiel) wurden jeweils 10 Rohrabschnitte untersucht, um mögliche Schwankungen bei den Werten auszugleichen. Die angegebenen Werte sind der Mittelwert aus den 10 Messungen.

Um die Größe der Innenoberfläche des Glasrohrabschnitts zu berücksichtigen, wurden die erhaltenen Messwerte in Ionenabgabe pro cm² der Glasoberfläche (siehe Tabelle 2) ausgedrückt.

Die Probenvorbereitung, insbesondere das Reinigen, das Befüllen und die Autoklavierbedingungen wurden wie bei den Glasbehältern in der ISO 4802-2 im Einzelnen beschrieben durchgeführt.

Die beidseitig offenen Rohrabschnitte wurden jedoch, um diese mit Wasser befüllen zu können, vor dem Autoklaviervorgang auf einer Seite mit einem Stopfen verschlossen und auf der anderen Seite mit einer zusätzlichen Abdeckung versehen. Um Kontaminationen mit den im Glas vorhandenen Komponenten zu vermeiden, wurden die jeweiligen Materialien für den Stopfen und die Abdeckung derart ausgewählt, dass diese keine der zu bestimmenden Glaskomponenten enthalten. Beispielsweise wurde bei der Bestimmung von Aluminiumionen keine Aluminiumfolie zur Abdeckung verwendet, sondern beispielsweise Zinnfolie; wenn auf Siliciumionen gestestet wurde, wurden keine Silikonstopfen eingesetzt, sondern ein anderes Material, wie z.B. ein Stopfen aus Viton^{®}, ein Fluorelastomer der Fa. DuPont.

Es wurden daher Glasrohrabschnitte mit erfindungsgemäßen Glaszusammensetzungen (erfindungsgemäße Ausführungsbeispiele) mit Glasrohrabschnitten von ähnlicher Glaszusammensetzung (Vergleichsbeispiele) verglichen, die jedoch keinen erfindungsgemäß eingestellten Kaliumoxidgehalt aufwiesen.

Die Analyse der Extraktionslösungen auf die einzelnen Elemente bzw. Ionen erfolgte daher wie in der ISO 4802-2 angegeben, jedoch wurde für die Bestimmung des Si-, B-, Ca-, Ba-, Al- und Na-Gehalts ein ICP-OES-Verfahren (optische Emissionsspektrometrie mit induktiv gekoppeltem Plasma) und zur Bestimmung des Kalium-Gehalts ein ICP-MS-Verfahren (Massenspektrometrie mit induktiv gekoppeltem Plasma) eingesetzt. Die gemäß der ISO 4802-2 einzusetzenden Analysenmethoden Flammen-AAS bzw. Flammen-AES (flammenatomemissions- oder -absorptionsspektroskopische Methoden) sind für die zu bestimmenden Elemente im Eluat zu wenig sensitiv oder nicht verfügbar. Weitere mögliche Glaskomponenten, die in den Beispielen nicht explizit vorliegen, können vom Fachmann im Stand der Technik ohne weiteres anhand seines allgemeinen Fachwissens mit bekannten Analysenmethoden bestimmt werden.

**Tabelle 1: Zusammensetzungen (alle Angaben in Gew.%) und physikalische Eigenschaften der erfindungsgemäßen Ausführungsbeispiele (A) und der Vergleichsbeispiele (V)**

| Bezeichnung | **V1** | **V2** | | **A1** | **A0** | **A2** | **A3** | **A4** | | **V3** | **V4** | **V5** |
|---|---|---|---|---|---|---|---|---|---|---|---|---|
| Bestandteil | | | | | | | | | | | | |
| SiO₂ | 75,5 | 74,1 | | 75,5 | 74,3 | 73,9 | 74,3 | 75,9 | | 73,9 | 72,1 | 74,3 |
| B₂O₃ | 10,4 | 11,0 | | 10,4 | 10,7 | 11,0 | 10,4 | 10,5 | | 10,4 | 10,3 | 9,2 |
| Na₂O | 7,2 | 7,5 | | 6,5 | 7,4 | 7,4 | 7,3 | 6,6 | | 6,9 | 6,3 | 6,8 |
| K₂O | **0,0** | **0,0** | | **0,15** | **0,28** | **0,50** | **0,70** | **0,81** | | **1,1** | **2,0** | **2,3** |
| Al₂O₃ | 5,5 | 6,7 | | 5,5 | 6,7 | 6,7 | 6,7 | 5,6 | | 6,4 | 7,2 | 6,7 |
| CaO | 1,4 | 0,7 | | 1,25 | 0,62 | 0,50 | 0,60 | 0,59 | | 1,3 | 0,8 | 0,7 |
| BaO | 0,0 | 0,0 | | 0,70 | 0,0 | 0,0 | 0,0 | 0,0 | | 0,0 | 1,3 | 0,0 |
| Summe | 100,0 | 100,0 | | 100,0 | 100,0 | 100,0 | 100,0 | 100,0 | | 100,0 | 100,0 | 100,0 |
| | | | | | | | | | | | | |
| α 20/300 [10⁻⁶/K] | 4,88 | 4,97 | | 4,8 | 5,05 | 5,2 | 5,12 | 4,86 | | 5,53 | 5,42 | 5,52 |
| T_{g} [°C] | 561 | 552 | | 550 | 552 | 550 | 553 | 549 | | 554 | 563 | 567 |
| V_{A} [°C] | 1163 | 1169 | | 1177 | 1166 | 1165 | 1172 | 1142 | | 1153 | 1174 | 1176 |

**Tabelle 2: gemessene Ionenabgaben für die Zusammensetzungen von Tabelle 1**

| Bezeichnung | **V1** | **V2** | | **A1** | **A0** | **A2** | **A3** | **A4** | | **V3** | **V4** | **V5** |
|---|---|---|---|---|---|---|---|---|---|---|---|---|
| Natriumabgabe nach ISO 4802-2 [µg Na₂O/Cm² Glasoberfläche] | 0,17 | 0,17 | | 0,155 | 0,14 | 0,14 | 0,14 | 0,14 | | 0,15 | 0,16 | 0,16 |
| Kaliumabgabe nach ISO 4802-2 [µg K₂O/cm² Glasoberfläche] | 0 | 0 | | 0 | 0 | 0 | 0 | 0,01 | | 0,02 | 0,02 | 0,03 |
| Gesamtalkaliabgabe nach ISO 4802-2 [µg Alkalioxid/cm² Glasoberfläche] | 0,17 | 0,17 | | 0,155 | 0,14 | 0,14 | 0,14 | 0,15 | | 0,17 | 0,18 | 0,19 |
| Aluminiumabgabe analog ISO 4802-2 [µg Aluminiumoxid/cm² Glasoberfläche] | **0,12** | | | | | **0,04** | **0,03** | | | | **0,06** | **0,09** |
| Gesamtionenabgabe analog ISO 4802-2 [µg ΣOxide der Bestandteile]/cm² Glasoberfläche] | **1,50** | | | | | **1,1** | **1,0** | | | | **1,7** | **1,5** |

Die Gesamtionenabgabe gemäß Tabelle 2 ergibt sich aus der eingesetzten Glaszusammensetzung, wonach auf sämtliche im Glas vorhandene Komponenten (Ionen) analysiert wird, die in Wasser abgegeben werden, und deren Menge qualitativ durch die beschriebenen Analysemethoden bestimmt wird.

Aus den Ergebnissen ist erkennbar, dass bei Einstellung des Kaliumoxid-Gehalts der Borosilikatgläser im erfindungsgemäßen Bereich eine unerwartet gute hydrolytische Beständigkeit der Glasinnenoberfläche erreicht wird. Die Werte für die erfindungsgemäßen Beispiele A0 bis A4 liegen unterhalb, zum Teil deutlich unterhalb der Vergleichsbeispiele V1 bis V5. Dies trifft in überraschender Weise nicht nur für die Alkaliionen an sich zu, sondern auch für die Aluminiumionenabgabe und auch die Gesamtionenabgabe, die gegenüber den Vergleichsgläsern deutlich reduziert werden konnte.

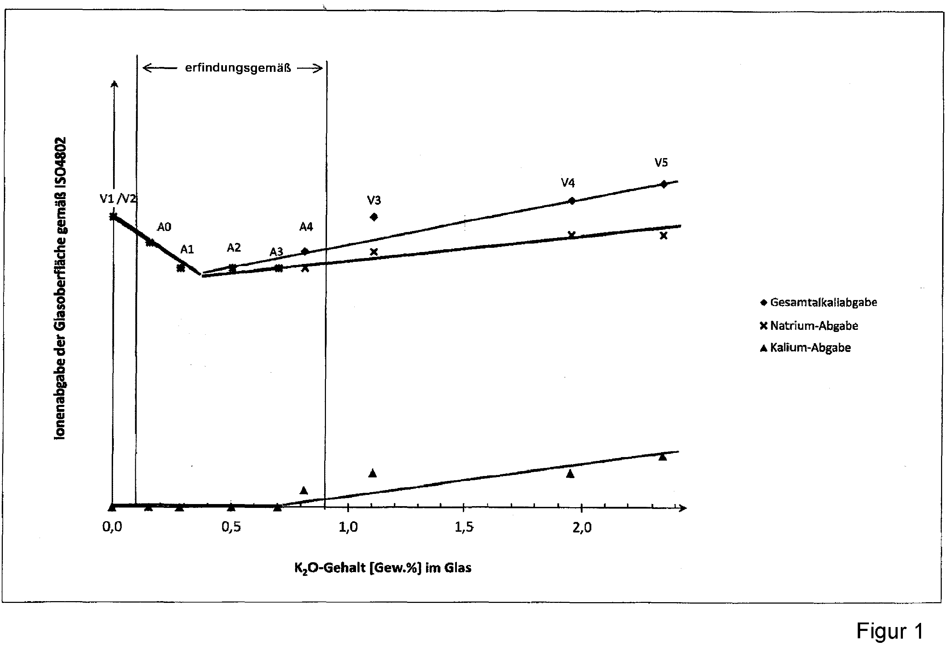

Die erhaltenen Ergebnisse für die Natrium-, Kalium- und Gesamtalkaliabgabe wurden in Figur 1 in schematischer Form dargestellt. Es wurde die gefundene Alkaliionenabgabe der Glasinnenoberfläche gemäß ISO 4802-2 (y-Achse) gegen den Kaliumoxid-Gehalt [Gew.-%] im erfindungsgemäßen Borosilikatglas (x-Achse) aufgetragen. Figur 1 sind daher drei verschiedene Kurven zu entnehmen, nämlich der Verlauf von Natrium-, Kalium- und Gesamtalkaliabgabe in Abhängigkeit des K₂O-Gehaltes im Glas.

Aus Figur 1 ist folgendes zu entnehmen: Mit zunehmendem Kaliumoxid-Gehalt sinkt die Abgabemenge an Natriumionen bei Prüfungen nach ISO 4802-2 zunächst ab. Gleichzeitig steigt jedoch die Kaliumionenabgabe mit steigendem Kaliumgehalt im Borosilikatglas an. In überraschender Weise steigt die Kaliumionenabgabe aber erst ab einem Kaliumgehalt von über 0,9 Gew.-% deutlich an, so dass in der Summe der Gesamtalkaliabgabe im Bereich von 0,1 bis 0,9 Gew.-% vorteilhafte Ergebnisse erzielt werden. Besonders vorteilhaft ist der Bereich von 0,1 bis 0,85 Gew.-%, und insbesondere der Bereich von 0,2 bis 0,8 Gew.-% und ganz besonders vorteilhafte Ergebnisse werden im Bereich 0,2 bis 0,75 Gew.-% erreicht, in dem sogar ein Minimum für die Gesamtalkaliabgabe beobachtet wurde.

Die Ergebnisse zeigen, dass die erfindungsgemäßen alkalihaltigen Borosilikatgläser zur bevorzugten Verwendung als Primärpackmittel im Pharmabereich geeignet sind und insbesondere für wässrige oder wasserhaltige Arzneimittel zum Einsatz kommen können.

Mit der vorliegenden Erfindung werden somit Borosilikatgläser bereitgestellt, die hervorragend für die Verwendung als Pharmaprimärpackmittel, wie Fläschchen oder Ampullen, geeignet sind. Insbesondere die in den Behältnissen aufbewahrten wässrigen oder wasserhaltigen Arzneimittel greifen das Glas nicht in nennenswerter Art und Weise an, so dass das erfindungsgemäße Borosilikatglas keine oder nur wenige Ionen freisetzt.

## Patentansprüche

1. Borosilikatglas, bevorzugt zur Verwendung im Pharmabereich, das die nachfolgende Zusammensetzung in Gew.-% aufweist:
| | |
|---|---|
| SiO₂ | 71 - 77 |
| B₂O₃ | 9 - 12 |
| Al₂O₃ | 5,5 - 8 |
| Na₂O | 6 - 8 |
| K₂O | 0,1 - 0,9 |
| Li₂O | 0 - 0,3 |
| CaO | 0 - 1,5 |
| BaO | 0 - 1 |
| F | 0 - 0,3 |
| Cl- | 0 - 0,3 |
| MgO+CaO+BaO+SrO | 0 - 2. |

2. Borosilikatglas nach Anspruch 2, **dadurch gekennzeichnet, dass** der K_{2O}-Gehalt im Bereich von 0,1 bis 0,88 Gew.-%, bevorzugter im Bereich von 0,1 bis 0,85 Gew.-%, noch bevorzugter im Bereich von 0,1 bis 0,8 Gew.-%, insbesondere im Bereich von 0,2 bis 0,8 Gew.-%, ganz besonders bevorzugt im Bereich 0,2 bis 0,75 Gew.-% liegt.

3. Borosilikatglas nach Anspruch 1 oder 2, **dadurch gekennzeichnet, dass** der SiO₂-Gehalt im Bereich von 72 bis 77 Gew.-%, noch bevorzugter 73 bis 77 Gew.-% insbesondere bevorzugt > 74 bis 77 Gew.-% liegt.

4. Borosilikatglas nach mindestens einem der vorangehenden Ansprüche, **dadurch gekennzeichnet, dass** der Al₂O₃-Gehalt 5,6 bis 7,8, bevorzugter 5,6 bis 7,5 Gew.-%, insbesondere 6,0 bis 7,2 Gew.-% beträgt.

5. Borosilikatglas nach mindestens einem der vorangehenden Ansprüche, **dadurch gekennzeichnet, dass** der B₂O₃ im Bereich von 10 bis 12 Gew.-%, bevorzugter im Bereich von > 10 bis 12 Gew.-%, insbesondere im Bereich von 10,5 bis 11,5 Gew.-% liegt.

6. Borosilikatglas nach mindestens einem der vorangehenden Ansprüche, **dadurch gekennzeichnet, dass** der Lithium-Gehalt im Bereich 0 bis 0,2 Gew.-%, bevorzugter im Bereich von 0 bis < 0,2 Gew.-%, besonders bevorzugt im Bereich von 0 bis 0,15 Gew.-%, insbesondere im Bereich von 0 bis 0,12 Gew.-% liegt, ganz besonders bevorzugt kein Lithium vorhanden ist.

7. Borosilikatglas nach mindestens einem der vorangehenden Ansprüche, **dadurch gekennzeichnet, dass** der Calcium-Gehalt im Bereich von 0,1 bis 1,3 Gew.-%, besonders bevorzugt 0,2 bis 1,0 Gew.-%, insbesondere bevorzugt 0,3 bis 0,8 Gew.-% liegt.

8. Borosilikatglas nach mindestens einem der vorangehenden Ansprüche, **dadurch gekennzeichnet, dass** der Barium-Gehalt im Bereich von 0 bis 1,0 Gew.-%, bevorzugt im Bereich von 0,1 bis 1,0 Gew.-% liegt.

9. Borosilikatglas nach mindestens einem der vorangehenden Ansprüche, **dadurch gekennzeichnet, dass** der ZrO₂-Gehalt im Bereich von 0 bis 2 Gew.-%, bevorzugter 0 bis 0,1 Gew.-% liegt, besonders bevorzugt kein ZrO₂ vorhanden ist.

10. Borosilikatglas nach mindestens einem der vorangehenden Ansprüche, **dadurch gekennzeichnet, dass** der ZnO-Gehalt im Bereich von 0 bis 0,6 Gew.-%, bevorzugt 0,1 bis 0,5 Gew.-%, besonders bevorzugt 0,15 bis 0,45 Gew.-%, liegt.

11. Borosilikatglas nach mindestens einem der vorangehenden Ansprüche, **dadurch gekennzeichnet, dass** der thermische Ausdehnungskoeffizient α_{20/300} im Bereich von 4,8 x 10⁻⁶ /K bis 5,6 x 10⁻⁶ /K liegt.

12. Borosilikatglas nach mindestens einem der vorangehenden Ansprüche, **dadurch gekennzeichnet, dass** es zu Rohren ziehbar ist, bevorzugt unter Verwendung des Danner-Ziehverfahrens.

13. Borosilikatglas nach mindestens einem der vorangehenden Ansprüche, **dadurch gekennzeichnet, dass** das Glas bis auf unvermeidliche Verunreinigungen frei ist von As₂O₃ und Sb₂O₃.

14. Verwendung eines Borosilikatglases nach einem der vorangehenden Ansprüche 1 bis 13 im Pharmabereich.

15. Pharmaprimärpackmittel, **dadurch gekennzeichnet, dass** es aus einem Borosilikatglas nach mindestens einem der vorangehenden Ansprüche 1 bis 13 besteht.
